# EUROPEAN PATENT APPLICATION

(11) **EP 2 151 165 A1**
(43) Date of publication of application: **10.02.2010**
(21) Application number: 08161921.5
(22) Date of filing: 06.08.2008
(51) Int. Cl.: A21D 13/00, A21D 15/02, A23L 1/00, A23P 1/08

(54) **Multi-Layered Chilled Dessert**

(71) Applicant: Nestec S.A., 1800 Vevey (CH)
(72) Inventor: Carli, Sophie, 14160 Dives sur Mer (FR); Gaultier, Mickael, 14100 Lisieux (FR); Serre, Jean-Emmanuel, 14100 Le Mesnil-Eudes (FR)

(57) **Abstract**

The present invention relates to a multi-layered, cooked and chilled dessert in a heat-resistant container and to a method for manufacturing it. The dessert of the invention is prepared by subsequently filling layers in a heat-resistant jar and baking the dessert comprising the layers, followed by cooling the dessert to chilled conditions. The dessert may be consumed as chilled dessert or, alternatively, following a reheating step shortly before serving. The dessert of the present invention provides advantages with respect to food safety in that its manufacturing process is shortened and not prone to contamination if compared to prior art processes.

## Description

### Technical Field

The present invention relates to a process of preparing a dessert, to a dessert obtained by the process and to a chilled dessert comprising at least two layers of different texture and/or viscosity.

### Background Art and Problem to be Solved

Chilled desserts having two or more separate layers provide the possibility of combining different flavours and textures. Following preparation of such chilled desserts, the different layers should not mix with each other, so that during consumption, the contrast of the different layers, for example different viscosities and/or different biting characteristics, are experienced. For example, a cake layer may be combined with a cream and/or a mousse layer. Such desserts are widely appreciated by consumers, as they provide superior sensations if compared to desserts having only a single texture and/or overall flavour sensation.

For food safety reasons, microbial growth is routinely inhibited or even prevented in desserts by applying a heat-treatment and/or by storing the dessert at below-ambient temperatures, for example under frozen or chilled conditions.

Multi-layer desserts as described above are generally prepared by cooking the layers separately, combining the layers in a packaging and then storing the assembled multi-layer dessert under below-ambient temperature.

In view of this state-of-the art preparation of multi-layer desserts it is an objective of the present invention to shorten and facilitate the preparation process. In particular, it is an objective to solve the increased risk of contamination and other problems associated with the separate cooking of different layers and/or components of multi-layer desserts. It is also an objective to avoid the assembling of cooked layers.

It is a general objective to increase the food safety of desserts, for example by further and better inhibiting or preventing microbial growth.
Very popular multi-layer desserts are those that comprise a liquid and/or molten layer, for example a cake with a molten chocolate core. Shortly before consumption, some of these desserts are heated for a short, predetermined time, for example directly by the consumer him-/herself or for example in a restaurant by the staff shortly before serving the dessert, so that at least part of the dessert is preferably consumed at ambient and/or above ambient temperature. The heating shortly before consumption may be conducted in an oven, for example a microwave oven. This kind of desserts is generally referred to as re-heatable dessert.

Desserts with a liquid, for example molten layer are prepared in different ways according to the prior art. According to one practice, the liquid, molten layer is provided in the form of a frozen piece during assembling, so that during the final heat treatment before consumption, the frozen layer is only thawed, but not completely cooked. According to another practice, a dough is undercooked or incompletely cooked during the manufacturing so that the centre remains uncooked. Shortly before serving, the dessert is baked, for example in a microwave oven, for a limited, exactly determined time by the consumer, ensuring that the centre of the dough is not cooked. In this way, a liquid "molten" centre is conserved. This latter case is not a multi-layer dessert in the strict sense, because the different textures are brought about by differential cooking of the inner core and the outside parts of a single cake-mass, and not by different components or layers.

### Disclosure of the invention

Remarkably, the present inventors provide a chilled dessert that is prepared according to a facilitated, simpler method if compared to the prior art. The dessert including various layers is entirely cooked in its serving container. By the cooking step, the final texture of each layer is determined. If one layer is a cake layer, for example, the cake layer is cooked together with one or more other layers and thereby receives its final texture. In this way the "cold-assembling" and/or "undercooking" processes according to the prior art are avoided, the preparation process is shortened and food safety is increased.

Furthermore, product quality is more consistent, since under-cooked or non-cooked layers are absent. This is particularly important with respect to re-heatable desserts, where small deviations in the re-heating step before consumption can result in very differing outcomes with respect to the texture of the different layers. According to the invention, the layers in the dessert of the present invention generally retain their texture during re-heating.

Accordingly, in a first aspect, the present invention provides a method for preparing a cooked multi-layered chilled dessert, the method comprising the steps of injecting a first component into a heat resistant container thereby providing a first layer; injecting a second component into the heat resistant serving container thereby forming a second layer; wherein said first and said second components are different; heat-treating said container comprising said first and second layers in a way that a temperature of at least 65°C is obtained in all layers throughout the dessert.

According to a preferred embodiment, and at least one of the components is a substantially uncooked and/or precooked cake dough. According to another embodiment, said first and second layers, following the step of heat-treating, have different textures, and wherein said uncooked and/or precooked cake dough is cooked to provide a cake layer.

In a second aspect, the present invention provides a dessert that can be obtained by the method of the invention.

In a third aspect, the present invention provides a cooked multi-layer dessert, which is stored under chilled conditions, said dessert comprising at least two layers of different texture, wherein at least one layer is a cake layer and at least one layer is a cream and/or mousse layer, said dessert being provided in a heat-resistant serving container.

### Detailed Description of the Preferred Embodiments

A skilled person, for example a pastry cook, can work the method of preparing a chilled dessert of the present invention, for example in a hand-operated manner. Preferably, however, at least some steps of the method are automated, which makes the method useful for industrial, up-scaled production. Accordingly, one or several steps of the method take place in an automated manner, for example by use of programmable equipment. In particular, one or more of the steps of mixing of ingredients to obtain a component to be filled into a container, the step of filling defined quantities of different components into containers and the step of heat-treating the filled-in containers may be performed by programmed machines, for example, in a substantially continuous method.

For example, empty containers may be transported to a filling station, where a filling machine fills a first component into the container so as to provide a first layer, followed by transporting the container to a further filling station, where a second component is filled into the same container, on top of the first layer, so as to form a second layer. This process may be continued until all layers are filled into the container.

The present invention relates to the preparation of a multi-layered dessert. A "layer", for the purpose of the present invention, is a mass or a quantity of said dessert that has a specific texture with a generally homogenous appearance throughout the layer. A "homogenous" appearance or layer, for the purpose of the present invention, also encompasses components comprising distinctly recognizable ingredients, for example pieces, such as fruit pieces, chocolate pieces, whole or cut nuts, said pieces being homogenously distributed within a mass, thereby forming the layer.

For example, a layer may be a cake layer, which, once cooked, has an overall solid appearance throughout. A layer may also be a cream layer, for example, having a creamy, viscous and/or melt-in-the-mouth texture. Any layer may be subjected to investigation, in particular investigation of the texture by available equipment and methodology. For example, the penetrometry of a layer may be determined. The term "layer" does not necessarily mean that a layer completely covers another component, such as another layer. A core may also be regarded as a layer. According to an embodiment, however, the multi-layered dessert comprises and preferably consists of two or more layers, wherein a second layer completely covers a first layer, and an optional third, fourth, fifth, sixth and nth layer, with n being an integer of greater than 2, completely covers the respective previous layer. Two or more layers may thus be superimposed.

Preferably, the dessert comprises at least two layers, which have a different colour, thereby providing an optically perceivable indication of the presence of different layers. For example, the differently coloured layers may be perceived thorough a transparent container, as described further below, thereby directly showing a consumer the presence of different layers in the dessert.

The dessert of the present invention preferably has 6 or less layers, more preferably 5 or less layers, and most preferably 4 or less layers as defined above, whereby at least two layers, one following the other, are different, preferably characterized by a different texture.

The method of the present invention comprises the steps of filling a first component and a second component into a heat-resistant container, thereby providing two layers in said container.

A "component", for the purpose of the present specification, may be a single ingredient and or a mixture of different ingredients. A component, once filled into the container, provides a layer as defined above. Each component and/or layer provides a specific texture of the dessert obtained by the method of the present invention. For example, the dessert of the present invention comprises a cake layer and/or a cream layer, as defined below.

The present invention provides a dessert comprising different layers of different texture. The expression "different texture", for the purpose of the present specification, generally refers to any kind of difference of texture that is perceivable by consumers upon consumption of a dessert of the present invention. A different texture is provided, for example, by different biting characteristics of different layers of the dessert. Various laboratory equipments are available to the skilled person so as to experimentally evaluate the texture of a given, homogeneous entity, such as a layer in the dessert of the present invention. If there is a doubt about the difference of texture, penetrometry and/or viscosity values of a specific layer and/or component may be used for determining presence or absence of different texture. Penetrometry and viscosity values are preferably determined as detailed in the examples below. If two layers have the same penetrometry and/or viscosity values, they may still have different texture. In this case, the specific weight (density), the water activity Aw and/or the dry-matter content can be used as an indicator for texture of a layer.

The different layers filled into the container are preferably in contact with each other. This may be the result of sequential filling of the layers into the same container, one layer above the other, for example. In order to get a clear separation between the different layers during dosing and subsequent heat treatment, it is advantageous that the layers are characterised by different densities and/or viscosities at the time of filling. Accordingly, the components forming the layers are preferably selected and/or prepared so as to prevent mixing and/or merging of the layers, and/or diffusion between the layers following filling and before and before heat-treating. Similarly, the characteristics of the layers are such that mixing/merging is prevented also following the heat treatment. As detailed further below, a cake layer may be provided with whipped egg, which may be in filled below or onto a layer devoid of whipped egg. In this way, the separation of the layers can be obtained, for example.

According to an embodiment, the dessert of the present invention comprises at least one "cake layer". A cake layer, for the purpose of the present invention, is characterized by its generally liquid, viscous texture before and at filling, thereby enabling automated injection into a suitable container by typical filling equipment, and by the more solid texture following the heat-treatment. Generally, the cake layer, once cooked, has no liquid properties any more and viscosity measurements are no longer possible. Accordingly, the at least one cake layer obtains its final, solid texture and appearance, basically by the heat-treatment (cooking/baking) in the container following filling.

A cake dough may be prepared with ingredients that are typical for cakes. For example, the cake may comprise a starch source, for example a flour, a sweetening agent, such as sugar and/or an artificial sweetener, eggs, for example whole egg, egg yolk and/or egg white, a raising agent, and flavouring ingredients. The cake may also comprise fat and/or oil sources, chocolate and/or nuts.

Since the present invention concerns a dessert, the cake layer is preferably a sweet cake.

Preferably, the cake layer comprises a raising agent, which may be whipped egg white, a biological and/or a chemical leavener, for example.

According to an embodiment, the cake layer comprises a starch source, such as a cereal flour, tapioca starch, and/or potato starch, for example. Cereal flours may be selected from rice flour, wheat flour, and maize starch, for example. Preferably, the cake layer comprises at least 3 percent, preferably at least 5 percent, more preferably at least 7 percent and most preferably at least 10 percent by weight of starch.

According to an embodiment, the cake layer comprises native egg white, in particular whipped egg white. Egg white may replace the raising agent or may be used in addition to an additional, separate raising agent. For example, the component providing the cake layer comprises, before cooking, at least 10 percent, preferably at least 20 percent, and most preferably at least 25 percent by weight of whipped egg white. Preferably, the ingredients for preparing the cake layer comprise native protein, which has not been totally denatured in earlier heat treatments, such as pasteurisation. In particular the proteins of an egg-based ingredient, such as the protein of whipped egg, comprises and preferably consists of native, non-denatured proteins, which are heat sensitive. Accordingly, if a pasteurised egg white is used, for example for preparing whipped egg white, the protein in the latter is preferably not denatured.

The use of whipped egg white with native protein provides the advantages of enabling solidification of the layer comprising it by heat-treating, and the advantage of providing a particular viscosity and/or density, suitable to avoid merging of the layer with other layers at filling.

According to an embodiment, the cake layer comprises egg yolk. Preferably, the cake layer comprises at least 5 percent, preferably at least 8 percent, more preferably at least 11 percent and most preferably at least 14 percent by weight of egg yolk.

According to an embodiment, the cake layer comprises at least 5 percent, more preferably at least 7 percent and most preferably at least 9 percent by weight of sugar.

According to a preferred embodiment, the cake layer comprises at least 10 percent by weight of whipped egg white, at least 5 percent by weight of a starch component, at least 5 percent by weight of sugar.

The cake layer may also include nuts such as almonds and/or hazelnuts, which may be provided in the form of powders. According to an embodiment, the cake layer comprises at least 5 percent, preferably at least 10 percent and most preferably at least 15 percent by weight of powdered nuts.

The ingredients are mixed appropriately before filling. For example, egg white may be whipped together with sugar or as such, and then added to the other ingredients, the latter being pre-mixed beforehand. Once all ingredients are mixed forming one homogenous cake dough, which is then filled into the container.

The viscosity of the uncooked cake dough when filling and before the heat-treatment is preferably 300000 or less cps, more preferably 200000 or less cps and most preferably 140000 or less cps. During the heat-treatment, the cake dough is baked and, thereafter, characterized by a solid texture, of which viscosity cannot be determined.

The penetrometry value of the cake dough when filling and before heat-treating is preferably 300g or smaller, more preferably 150g or smaller and most preferably 50g or smaller.
Following the step of heat-treating, the penetrometry value of the cake layer is preferably 150g or greater, more preferably 200g or greater, 250g or greater, 300g or greater, 350g or greater, 400g or greater and most preferably 450g or greater.

The difference of the penetrometry values of the cake layer before and after cooking illustrate that the cake layer is cooked during the step of heat-treating the container comprising at least two layers. Layers such as a cake layer may thus preferably experience a substantial change in its texture during the heat treatment, and in particular a substantial increase in the penetrometry value and a loss of liquid properties. As mentioned above, the viscosity of a cooked layer can generally not be determined any more, because the impact of mechanical force on the cooked cake layer results in disintegration, in particular crumbeling.

A "substantial increase in penetrometry", for the purpose of the present invention, refers to an at least 1.5 fold, preferably at least 2 fold, more preferably at least 3 fold and most preferably at least 5 fold increase in penetrometry. However, the cake layer may experience an up to 7 fold or even up to 10 fold increase in penetrometry value during the cooking step.

Preferably, a cake layer has a dry matter content of about less than 55 percent by weight, preferably 60 or less percent by weight. The dry matter content is determined after the step of heat-treating the container containing the different layers, preferably after the step of cooling the dessert to a temperature 8°C or lower.

The dessert of the present invention may comprise one or more, such as two or more layers the texture of which changes during the heat treatment. Such layers may be cake layers, the penetrometry values of which increase during the heat treatment.

If the dessert comprises two or more cake layers, the cake layers may be different, having a different texture and/or different flavours, for example.

According to an embodiment, the method comprises the step of filling at least one cream layer.

The "cream" layer may also be affected by the heat-treatment, but it is generally not characterized by such a marked change in texture as the cake layer. Accordingly, the viscosity and/or penetrometry values of cream layer generally remain substantially constant during the step of heat-treating.

The cream layer may to some extent solidify during the step of cooling the heat-treated dessert to a temperature of 8°C or lower.

A cream, for the purpose of the present invention, is an entity that generally has less apparent biting characteristics than a cake. The cream thus provides a creamy, melt-in-the-mouth texture, which does not require chewing upon consumption. Generally, unlike the cake layer, the cream layer does not disintegrate into crumbles upon the impact of a mechanical force.

The term "cream" may also be considered as a "sauce" or a "mousse". The cream layer may have a more liquid texture if compared to the cake layer. Accordingly, the "cream" layer may have a lower viscosity and/or consistency than the cake layer following the heat-treatment.

Accordingly, the viscosity of the cream layer when filling and before heat-treating is preferably 7000 cps or less, more preferably 3000 cps or less and most preferably 500 cps or less.

The penetrometry value of the cream layer when filling and before heat-treating is preferably 200g or smaller, more preferably, 100g or smaller and most preferably 10g or smaller.

Following the step of heat-treating, the penetrometry value of the cream layer is preferably 300g or smaller, more preferably 250g or smaller even more preferably about 200g or smaller, for example 150g or smaller or 100g or smaller.

The dessert of the present invention may comprise one or more "cream layers".

The cream layer preferably comprises a milk-based ingredient and/or and egg-based ingredient and a sweetening agent, in particular sugar and/or an artificial sweetening agent. Furthermore, the cream layer preferably comprises both, the milk-based ingredient and the egg-based ingredient together with the sweetening agent.

The cream-layer preferably also comprises a fat and/or oil source and/or flavours. The fat and/or oil source, may be provided by the milk-based and/or by the egg based ingredient, for example. Flavours may be chocolate, cocoa powder, for example.

The egg-based ingredient may be selected from one or more of egg yolk, egg white, whole egg, for example. The egg white may be whipped, as may be the case in a mousse, for example. According to an embodiment, the "cream layer" comprises at least 5 percent, more preferably at least 8 percent, even more preferably at least 10 percent by weight of egg yolk.

The milk-based ingredient may be selected from one or more of whole milk, skimmed milk, cream, butter, whey, casein, and lactose, for example. For example, the cream layer comprises cream, that is, the fat fraction of whole milk.
According to an embodiment, the cream layer comprises at least 10 percent, preferably at least 20 percent and most preferably at least 30 percent by weight of milk-based ingredients, such as whey, lactose, cream, skimmed milk, whole milk, casein, for example.

The cream layer preferably According to an embodiment, a "cream layer" comprises at least 10 percent, preferably at least 12 percent by weight of chocolate.

Typical cream layers for the purpose of the present invention are selected from a mousse, a flavoured cream, a fruit puree, a yoghurt, a curd, for example.

The cream component may be prepared by mixing its ingredients, conducting an intermediate heat-treatment and/or homogenisation step with respect to this component only and filling the component into the container, for example on top of a cake layer, or on the bottom of the container.

The cream layer preferably has a dry matter content of 55 or less percent by weight, more preferably 53 or less percent, even more preferably 50 or less percent by weight.

As indicated above, mousse is also considered, for the purpose of the present specification, as a cream layer. A mousse is characterised by the presence of an edible forth and or foam-like ingredient, the latter entrapping many air bubbles, such as whipped cow's cream and/or whipped egg white. Accordingly, a mousse is characterized by a generally lower density than a cream devoid of a froth and/or foam-like ingredient. Accordingly, the specific density of the mousse layer, before and/or after the heat-treatment is preferably 1 or smaller, whereas the density of the other layers is generally equal to or above 1.

Similarly, with respect to the texture characteristics, a mousse may generally have lower penetrometry and slightly lower viscosity values than typical, non-mousse cream.

Accordingly, the viscosity of a mousse cream layer when filling and before heat-treating is preferably 8000 or less cps, more preferably 4000 or less cps and most preferably 1000 or less cps.

The penetrometry value of the mousse cream layer when filling and before heat-treating is preferably 200g or smaller, more preferably 100g or smaller and most preferably 10g or smaller.

Following the step of heat-treating, the penetrometry value of the mousse cream layer is preferably 400g or smaller, more preferably 300g or smaller and most preferably 100g or smaller.

The mousse layer preferably has a dry matter content of 45 or less percent, for example about 40 or less percent by weight.

According to an embodiment, the process of the present invention comprises the step of providing a third component and filling the third component into the heat resistant container so as to form a third layer. The third layer may be, for example, a second or further cake layer and/or a second or further cream layer, as defined above, for example.

According to specific embodiments, the dessert of the present invention has the following layers in the following order: (1) cake-cream, (2) cream-cake (3) cake-cream-cake, (4) cream-cake-cream, (5) cream-cream-cake, (6) cake-cake-cream, for example. For example, two or more cake layers may be separated by one or more cream layers, and two or more cream layers may be separated by one or more cake layers. When there are two or more cake and/or two or more cream layers, the cake and or cream layers may be the same or different. As this illustrates, the present invention provides many possibilities with respect to the sequence and number of different layers used.

When a mousse cream layer is used, it is possible to use one or more cream layers, of which one or more may be mousse or non-mousse cream layers, for example.

In all embodiments above, a further, thin top layer may be provided, such as a thin chocolate layer, a thin fruit puree layer, a caramel sauce, a sugar layer, for example.

As mentioned, the container that is used for filling the different components and/or layers is preferably heat resistant. "Heat-resistant", for the purpose of the present specification, refers to the capacity of the container to resist to the step of heat-treating, for example cooking and/or baking the dessert with the layers at the temperatures and for the time periods indicated below. During the heat-treatment, the container preferably retains its rigidity and is inert. Preferred containers are selected from heat-resistant plastic containers, glass-based containers, metal-based containers and clay-based containers, aluminium containers. In particular glass, many metals and clay are completely inert when exposed to the temperatures of the heat-treatment as detailed above. Preferably, the container is a glass or a clay jar, for example a terracotta jar. At least partially transparent glass jars are preferred, as a consumer can see the multi-layered structure of the dessert of the invention through the glass.

According to a preferred embodiment, the container is a container that can be subjected to micro-waves in a micro-wave oven. For example, the container may be selected from a glass pot, a plastic pot and an aluminium cup.

The method of the present invention comprises the step of heat-treating the container comprising at least two layers. The step of heat-treating may be performed by an oven, for example. Preferably, a batch of several containers is baked in a closed oven. Alternatively, the step of heat-treating is continuous, an taking place in an open oven, with suitable conveyors continuously transporting filled containers through an opening into an oven and transporting the filled containers, once sufficiently cooked, through an outlet opening out of the oven.

For the purpose of the present specification, the step of "heat treating" refers to any kind of heat-treatment, such a baking and cooking, for example.

According to an embodiment, the step of heat-treating takes place for 4 to 70 minutes at a temperature of 100-250°C. Preferably, the step of heat-treating may be conducted fro 5-60 min, more preferably 6-45, and most preferably 7-30 min. The preferred temperature is 110-220°C, preferably 120-200°C.

Preferably, the heat-treatment results in a complete cooking of the contents of the container, meaning that a temperature of at least 65°C, preferably at least 70°C, more preferably at least 75°C and most preferably at least 80°C is achieved in all parts of the dessert for at least some time.

Preferably, following the heating step, the dessert is immediately closed, for example sealed, for example by applying a removable lid on top of the container.

One advantage of the heat-treatment is to increase food-safety by destroying or at least reducing microbes that might have survived previous steps of pasteurisation and/or sterilisation of ingredients or components during mixing and filling, for example. Even though the presence of microbial organisms is avoided by these previous safety measures, the heat-treatment may still further increase food safety, since all components are heated at the same time when filled in the container, preferably shortly before sealing.

Another advantage and/or purpose of the heat-treatment is to provide the final texture to at least one layer. In particular, cake layers are cooked, baked during the final step of heat-treating, thereby receiving their final texture. Accordingly, the solidity and/or consistency of at least one layer increases substantially during the heat-treatment, thereby yielding a multi-layered dessert with layers of different textures.

Preferably, the container is also the storage and/or serving container. In other words, the container in which the dessert is cooked, is later subjected to the storage under chilled conditions and the dessert is served in this very container.

In an embodiment, the method of the present invention comprises the step of cooling the heat-treated dessert to a temperature of 8°C or below, preferably, 7°C or below, 6°C or below, 5°C or below and most preferably 4°C or below, following the step of heat-treating. Preferably, the dessert of the invention is stored under such chilled conditions ("chilled dessert"), that is at or above 0°C. The step of cooling may also affect the texture of one or more layers, in particular of the cream layer. Accordingly, cooling may result in the final setting (fat crystallisation).

According to an embodiment, the method of the invention comprises the step of providing a third component and filling said third component into the heat resistant container thereby forming a third layer.

According to an embodiment of a dessert comprising at least three layers, the first and third layers are cake layers, whereas the second layer is a cream layer, for example a liquid, low viscosity cream layer.

The different layers reported herein may be provided each with about the same volume and/or with different volumes. For example, in a two-layered dessert, the volume ratio between a high-viscosity layer (e.g. cake-layer) and a viscous, liquid layer (e.g. cream layer) may be in the range of 4:1 to 1:4 (cake:cream), for example.

According to an embodiment, the ratio is 3:1 to 1:3, and according to another embodiment the vol.-ratio of the cake layer with respect to the cream layer is in the range of 4:1 to 1:1, or 3:1 to 1:1, or 2:1 to 1:1.

The same ratios may apply in a three-layered dessert, for example in a cake-cream-cake dessert. If, for example the ratio is 4:1 in a three-layered dessert, each of two cake layers has about 4x the volume of the cream layer.

The dessert of the present invention is preferably a chilled dessert. A "chilled dessert" is a dessert that is stored at below-ambient temperature, the ambient temperature being considered as 25°C. Preferably, a "chilled dessert" is a dessert designed for storage at the temperatures indicated above.

Preferably, the dessert of the present invention has a shelf life of 10 to 50 days following production when stored at a temperature of 4 to 6°C.

The dessert of the present invention is provided with a serving size of preferably 100-500 ml, preferably 120-350 ml and more preferably 50-250 ml.

Preferably, the dessert is a cooked dessert in that it was subjected altogether and including the container in which it is provided and served to a heat-treatment as described above.

According to an embodiment, the dessert of the present invention is a re-heatable dessert. A "re-heatable dessert", for the purpose of the present specification, is a dessert that is re-heated shortly before consumption. Accordingly, at least part of the dessert has an above-chilled, preferably an above-ambient temperature when consumed. More preferably, at least part of the dessert has a temperature above 30°C, more preferably above 35°C and most preferably above 40°C following the re-heating.

Re-heating may be performed by a consumer him/her-self, or by staff offering and/or serving the dessert. For example, in a restaurant, kitchen staff may re-heat the dessert before it is served to the consumer.

Any suitable heating device, including devices selected from standard ovens and microwave ovens, for example, may perform re-heating. The step of re-heating takes place for about predetermined times. Generally, the packaging of the dessert indicates preferred re-heating conditions, in particular the time of re-heating in dependence of the heating device used.

The re-heatable dessert of the present invention has the advantage of providing a warm and/or heated dessert, if desired. Preferably, the re-heatable dessert comprises a liquid and/or molten layer when heated, such as a molten chocolate layer.

Furthermore, the present invention is advantageous over prior art re-heatable desserts with molten layers in that the exact time of re-heating is not as crucial as with corresponding desserts of the prior art. For example, in desserts having a central, undercooked layer, the undercooked layer may solidify if the indicated time of re-heating is exceeded, meaning that there is no longer a central, liquid layer any more.

Preferably, the re-heatable dessert of the present invention comprises at least three layers, in particular two cake layers and a liquid cream layer, for example a chocolate layer between the two cake layers.

Texture properties such as penetrometry, dry matter content, density and/or, if possible, viscosities values referred to herein are preferably determined with respect of a dessert before consumption, or, in the case of a re-heatable dessert, before re-heating. For example, if the desert is consumed as a chilled dessert, penetrometry values and dry matter content of the different layers following the preparation of the dessert are conducted with the chilled dessert. If the dessert is a chilled, re-heatable dessert, penetrometry values of the layers of the re-heatable dessert are determined with respect to the dessert before being reheated in accordance with the manufacturers indications on the packaging of the dessert. If measurements are used to show the presence or absence of a substantial change in texture during the step of heat-treating, measurements are made before the heat-treating step. For example, a component before being filled into the container may be subjected to penetrometry and/or viscosity measurements.

The present invention will now be illustrated by way of examples. These examples do not limit the scope of this invention, which is defined by the appended claims.

### Examples

### Texture measurements

Texture characteristics of the different layers of the desserts disclosed in the following examples are determined by measurements of penetrometry and, if possible, of viscosity characteristics.

For penetrometry measurements, a Texture Analyser, TAXT21 is used. The penetrometer has a cylindrical rod of 4mm diameter. In each measurement, the rod is advanced into the sample of a layer at a speed of 2 mm/s until a depth of 15 mm. The mass corresponding to the force necessary to achieve the penetration is recorded in g (grams) for each sample.

For viscosity measurements, a Brookfield with the modulus 93 5 rpm for the cake and the modulus 04 50 rpm for the cream, mousse or sauce are used. Measurements where conducted with each layer of each dessert before filling into the container (and therefore, before heat-treatment), at ambient temperature (25°C), and, after cooking, following chilling of the cooked layer to temperature of 4-8°C.

With desserts that are intended to be re-heated following storage at chilled condition and shortly before consumption, measurements were also conducted immediately after re-heating according to the product specification indicated for re-heating.

### Example 1: Dessert with cream and cake layer

A dessert with a chocolate cream layer and a cake layer was prepared following the procedure as described below, on the basis of the ingredients listed in Tables 1 and 2.

**Table 1: Chocolate cream**

| **ingredient** | **quantity (%)/ layer** |
|---|---|
| liquid cream | 31,40 |
| whole milk | 31,40 |
| sugar | 10,00 |
| dark chocolate | 14,40 |
| egg yolk | 12,55 |
| maize starch | 0,25 |
| **total** | 100,00 |

The mix cream, milk, sugar, chocolate, and starch was UHT treated up to 136°C for a few seconds. After cooling at 50-70°C, eggs were added. This mix was reheated (65-85°C) and homogenised. The cream layer was dosed in the glassy high jars having a serving size of 50-500 ml.

**Table 2: Chocolate cake**

| **ingredient** | **quantity (%)/ layer** |
|---|---|
| egg white | 32,50 |
| sugar | 10,40 |
| dark chocolate | 23,40 |
| butter | 6,50 |
| egg yolk | 15,50 |
| maize starch | 7,70 |
| cacao powder | 4,00 |
| total | 100,00 |

The egg whites were whipped with the sugar as to reach 400 percent overrun. The liquid ingredients (melted chocolate, egg yolk, butter oil) were mixed together and their incorporation into the mousse was done separately from the powders. The incorporation of powders was done at the end, to minimise the time of whipping and thus the destruction of the already formed mousse. After the addition of the mix the overrun of the cake was approximately 60 percent.

The chocolate cake is dosed in the glassy high jars over the 40 g of the chocolate cream.

Afterwards the glass jars containing the chocolate cream and the cake were cooked in a continuous oven with vapour atmosphere at 140°C for 20 minutes.

After the cooking, the samples were sealed and stored at 4°C to cool down.

Table 3 below shows the results of texture measurements conducted with the layers before cooking and after cooking.

**Table 3: Texture measurements of dessert of Example 1**

| | | Layer | |
|---|---|---|---|
| | | Cake | Cream |
| before cooking | Penetrometry (g) | 47 | 5 |
| | Viscosity (cps) | 131000 | 484 |
| | Dry matter content (wt.%) | 63.3 | 47.05 |
| after cooking | Penetrometry (g) | 480 | 210 |
| | Viscosity (cps) | n.a. | n.a. |
| | Dry matter content (wt.%) | 67.0 | 51.29 |

As this example illustrates, the cake layer obtained its final texture during the cooking step, as expressed in terms of penetrometry. Also the texture of the cream layer changed, but a difference in texture (penetrometry value) between the cake layer and the cream layer can be noted also after the cooking.

The same example was repeated; with the difference that the chocolate cake is provided first in the glass jar and the cream is provided on top. This way of proceeding resulted in a dessert having the same texture properties as the dessert with an inversed sequence of layers.

### Example 2: Re-heatable cake with melted chocolate layer in the center

A three-layered dessert in the form of a re-heatable cake with a chocolate layer that is melted upon re-heating shortly by before serving following the procedure as described below, on the basis of the ingredients listed in Tables 4 and 5.

**Table 4: Chocolate sauce**

| **ingredients** | **quantity (%)/ layer** |
|---|---|
| chocolate | 3.00 |
| cocoa | 10.00 |
| milk | 60.00 |
| sugar | 15.00 |
| Maize starch | 0.5 |
| water | 11.5 |

The sauce was UHT treated up to 130°C for a few seconds and its texture parameters determined. Then, the preparation was dosed over the cake layer.

Thereafter, another dose of the chocolate cake layer (see Table 3) was added on top of the chocolate sauce.

Thereafter, the three-layered preparation was cooked in an oven at more than 160°C for a few min. After the cooking, the samples were sealed and stored at 4°C to cool down, yielding the dessert according to the present invention. Following cooling, texture parameters were again determined.

### Example 3: Serving of the re-heated dessert of Example 2

According to instructions provided on the packaging, the dessert of Example was put in a microwave and heated for 10 seconds at 850 W. Thereafter, texture measurements were conducted again and the results were as indicated in Table 5 below:

**Table 5: Texture measurements of dessert of Examples 2 and 3**

| | | Layer | |
|---|---|---|---|
| | | Cake | Sauce |
| Before cooking | Penetrometry (g) | 47 | 7 |
| | Viscosity (cps) | 131000 | 1330 |
| After cooking | Penetrometry (g) | 480 | 13 |
| After re-heating | Penetrometry (g) | 30 | 10 |

Table 5 shows the change in penetrometry value in the cake-layer following the heat-treatment, and the different textures of the different layers before consumption and also at the time of consumption of the dessert, following re-heating of the dessert.

A test person, when consuming the dessert, appreciated the different textures of the different layers of the dessert and the warm temperature of the dessert.

### Example 4. Dessert with mousse and cake layers

A mousse is prepared on the basis of the ingredients listed in Table 6 below:

**Table 6: Ingredient for mousse**

| **ingredients** | **quantity (%)/ layer** |
|---|---|
| whole milk | 30.00 |
| liquid cream | 48.00 |
| egg yolk | 10.00 |
| sugar | 9.00 |
| gelatine acid | 0.80 |
| Coffee powder | 2.20 |
| Total | 100,00 |

All ingredients are whipped to form the mousse. The overrun of the whipping procedure was about 100 percent. Afterwards, the mousse was dosed into jars and the same cake as described in Example 1 was filled on top to form a second layer. The dessert was cooked and chilled as described in Example 1. Table 7 below shows the result of the texture measurements.

**Table 7: Texture measurements of dessert of Example 4**

| | | Layer | |
|---|---|---|---|
| | | Cake | Mousse |
| before cooking | Penetrometry (g) | 47 | 8 |
| | Viscosity (cps) | 131000 | 876 |
| | Dry matter (%) | 63.3 | 40.4 |
| after cooking | Penetrometry (g) | 480 | 92 |
| | Viscosity (cps) | n.a. | n.a. |
| | Dry matter (%) | 67.0 | 42.90 |

Table 7 illustrates the different textures of the two layers by the different penetrometry values, which reveal a more consistent cake layer.

## Claims

1. A method for preparing a cooked multi-layered chilled dessert, the method comprising the steps of:
- injecting a first component into a heat resistant container thereby providing a first layer;
- injecting a second component into the heat resistant serving container thereby forming a second layer;
wherein said first and said second components are different, and at least one of the components is a substantially uncooked and/or precooked cake dough;
- heat-treating said container comprising said first and second layers in a way that a temperature of at least 65°C is obtained in all layers throughout the dessert; wherein said first and second layers, following the step of heat-treating, have different textures, and wherein said uncooked and/or precooked cake dough is cooked to provide a cake layer.

2. The method of claim 1, further comprising the step of cooling the heat-treated multi-layer dessert to a temperature of 8°C or below, preferably 5°C or below, following the step of heat-treating.

3. The method of any one of claims 1 and 2, wherein the viscosity and/or penetrometry value of said at least one of said layers layer increases substantially during said step of heat treating, thereby yielding the final texture of said layer.

4. The method of claim 1-3, wherein said uncooked and/or precooked cake dough is cooked and/or baked during said step of heat-treating, thereby providing a cake layer.

5. The method according to any one of claims 1-4, wherein said uncooked or precooked cake dough comprises at least 3 percent, preferably at least 5 percent by weight of a starch source and/or at least 10 percent, preferably at least 20 percent by weight of whipped egg white.

6. The method according to any one of claims 1-5, wherein said uncooked or precooked cake dough comprises one or more ingredients selected from sugar, egg yolk, an oil, a fat, powdered nuts, chocolate and cocoa powder.

7. The method of any one of claims 1-6, wherein said cake layer, following said step of heat-treating and/or chilling, has a penetrometry value of 150g or greater, preferably 250g or greater.

8. The method of any one of the preceding claims, wherein the dessert comprises one or more cream and/or mousse layer.

9. The method of claim 8, wherein said cream and/or mousse layer of the cooked and chilled desert is **characterized by** a penetrometry value of 250g or smaller, preferably 200g or smaller; and/or a dry matter content of 55 or less percent by weight.

10. The method of any one of claims 8 and 9, wherein said one or more cream layer is selected, independent from other layers, from a mousse; a cream, including a chocolate-flavoured cream, a vanilla-flavoured cream, a caramel-flavoured cream; a fruit puree; a yoghurt; and a curd.

11. The method of any one of the preceding claims, further comprising the step of providing a third component and filling said third component into the heat resistant container thereby forming a third layer.

12. The method of claim 10, wherein said first and third layers are cake layers, whereas the second layer is a cream layer.

13. The method of any one of the preceding claims, wherein said heat resistant container is a glass-based container, a metal-based container or a clay-based container, including containers selected from the group of a glass pot, an aluminium pot or an plastic pot.

14. The method of any one of the preceding claims, wherein said step of heat treating said container comprising said layers is conducted for 4-70 minutes at a temperature of 100-250°C.

15. A dessert that can be obtained by the method according to any one of claims 1-14.

16. A cooked multi-layer dessert, which is stored under chilled conditions, said dessert comprising at least two layers of different texture, wherein at least one layer is a cake layer and at least one layer is a cream and/or mousse layer, said dessert being provided in a heat-resistant serving container.

17. The multi-layered dessert of claim 16, which has a shelf life of 10 to 50 days at a temperature of 4 to 6°C.

18. The dessert of any one of claims 16-17, which has a serving size of 100 to 500 ml.

19. The chilled dessert of any one of claims 16-18, all layers of which are completely cooked within said container before storage under chilled conditions.

20. The chilled dessert of to any one of claims 16-19, wherein said at least two layers comprise a first and a second layer, the second layer completely covering said first layer in said container.

21. The chilled dessert of to any one of claims 16-20, wherein said heat resistant container is a glass-based container, a metal-based container or a clay-based container, including containers selected from the group of a glass pot, an aluminium pot or an plastic pot.

22. The chilled dessert of any one of claims 16-20, wherein said at least one cake layer has a penetrometry value of 150g or greater, preferably 250g or greater and said at least one cream layer has a penetrometry value of 250g or smaller and most preferably 200g or smaller.

23. The chilled dessert of any one of claims 16-21, wherein said at least one cake layer has a dry matter content of less than 55 percent by weight, preferably at least 60 percent by weight; and said cream layer has a dry matter content of 55 or less percent by weight, more preferably 53 or less percent by weight, even more preferably 50 or less percent by weight.

24. The chilled dessert of any one of claims 16-23, comprising at least three layers.

25. The dessert of any one of claims 16-24, which is a re-heatable dessert, said dessert being provided to be subjected, after being cooked, to a second heat-treatment together with its container before serving and/or consumption.

26. The dessert of claim 25, wherein said second heat treatment has the purpose serving a dessert at least part of which has an above-ambient temperature at consumption.

27. The dessert of any one of claims 16-26, having three layers, including a central cream layer and two cake layers, said dessert being intended to be subjected to a final heat-treatment shortly before consumption so as to be consumed at above-ambient temperature.
